(19) Europäisches Patentamt
European Patent Office
Office européen des brevets

(11) **EP 4 099 215 B1**

(12) **EUROPEAN PATENT SPECIFICATION**

(45) Date of publication and mention
of the grant of the patent:
**10.01.2024 Bulletin 2024/02**

(21) Application number: **21382500.3**

(22) Date of filing: **03.06.2021**

(51) International Patent Classification (IPC):
**G06V 30/414** (2022.01)    **G06V 10/26** (2022.01)
**G06T 1/00** (2006.01)

(52) Cooperative Patent Classification (CPC):
**G06V 30/414; G06T 1/0028; G06V 10/273;**
G06T 2201/0051; G06T 2201/0062; G06V 10/443;
G06V 10/48

(54) **COMPUTER VISION METHOD FOR DETECTING DOCUMENT REGIONS THAT WILL BE EXCLUDED FROM AN EMBEDDING PROCESS AND COMPUTER PROGRAMS THEREOF**

COMPUTERSICHTVERFAHREN ZUR ERKENNUNG VON DOKUMENTENBEREICHEN, DIE VON EINEM EINBETTUNGSPROZESS AUSGESCHLOSSEN WERDEN, UND COMPUTERPROGRAMME DAFÜR

PROCÉDÉ DE VISION PAR ORDINATEUR POUR DÉTECTER LES RÉGIONS D'UN DOCUMENT QUI SERONT EXCLUES D'UN PROCESSUS D'INCORPORATION ET PROGRAMMES INFORMATIQUES ASSOCIÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.12.2022 Bulletin 2022/49**

(73) Proprietor: **Telefonica Cibersecurity & Cloud Tech S.L.U.**
**28050 Madrid (ES)**

(72) Inventors:
• **Bianzino, Aruna Prem**
  **28050 Madrid (ES)**
• **Elosua Tome, Juan**
  **28050 Madrid (ES)**
• **Pérez Vieites, Diego**
  **28050 Madrid (ES)**
• **de los Santos Vilchez, Sergio**
  **28050 Madrid (ES)**
• **Garcia Nogueiras, Ivàn**
  **28050 Madrid (ES)**

(74) Representative: **Carlos Hernando, Borja Garrigues IP, S.L.P.**
**Hermosilla, 3**
**28001 Madrid (ES)**

(56) References cited:
**US-A1- 2007 183 626**

• **HUIJUAN YANG ET AL: "Text document authentication by integrating inter character and word spaces watermarking", 2004 IEEE INTERNATIONAL CONFERENCE ON MULTIMEDIA AND EXPO : JUNE 27 - 30, 2004, TAIPEI, TAIWAN, IEEE OPERATIONS CENTER, PISCATAWAY, NJ, vol. 2, 27 June 2004 (2004-06-27), pages 955-958, XP010770979, DOI: 10.1109/ICME.2004.1394360 ISBN: 978-0-7803-8603-7**
• **DUAN XINTAO ET AL: "Reversible Image Steganography Scheme Based on a U-Net Structure", IEEE ACCESS, vol. 7, 29 January 2019 (2019-01-29), pages 9314-9323, XP011707115, DOI: 10.1109/ACCESS.2019.2891247 [retrieved on 2019-01-28]**

## Description

Technical Field

Present invention has its application in the telecommunication sector, within the field of digital information security and digital content processing and generally relates to digital watermarking technology.

More particularly, the present invention refers to a method for detecting, using artificial intelligence (AI) algorithms, document regions that will be excluded from an embedding process. The method enables detecting invalid text contents to be moved by a digital text watermarking algorithm in order to improve the imperceptibility of the embedded information.

Background of the Invention

The inclusion of hidden information in a text file is a desired feature in many fields and for many different applications. On one side, hidden information embedded in a text document may be decoded by machines to enable automatic classification of documents. At the same time, such information may enable automatic validation of the authenticity, integrity, and ownership of a document. Furthermore, that information-included in confidential documents-may allow their tracking, dissuade information leak, or help in the identification of the responsible in a case of leak.

Information included in documents with this purpose is usually intended to be imperceptible by human beings while appreciable by computer systems, which can read and decode them. Such information inclusion is usually referred to as a watermark. A watermark is an alteration of a document that may include an identifying image or pattern, such as character spacing or character deformation in the case of text, or pixel shifting in frequency or space in the case of images. These alterations are intended to be not noticeable, but until now, any method proposed does not solve the problem of minimizing the alteration effects for a wide range of different document contents (for instance, documents with tables, lists, different indentations, math equations, index, etc.).

In the field of digital watermarking for images and video are well known, for instance, methods based on frequency that do that in an indirect way, where the information is embedded in the high frequency components. In these high frequency components, the visual human system (VHS) is not able to detect smooth modifications, then the perceptibility of the embedded information is very low.

On the other hand, all the digital watermarking algorithms for text documents in the state of the art and patents, specifically those based on shift of the elements such as characters, words, or lines, do not show any mechanism to deal with those kinds of problems, and all methods make the assumption that the documents have been made with only regular text, uniform spacing between elements and other properties that do not exist in the real world. When these methods are used on real documents there exist high probabilities of achieving undesirable visual effects on the documents used in the embedded process (mainly misalignments in elements such as indexes, tables, and lists, or even overlapping between elements such as characters or words). This limitation is the main reason why digital text watermarking algorithms have not made their leap to the market as they have done with other types of multimedia formats, such as images or videos.

Furthermore, the wrong selection of the elements to be used in the embedding process not only affects the visual part, but also can affect the capacity of the system to extract the information. The main reason is that algorithms are extracting information from parts where the spacing (information) is not as expected, so that these unexpected spaces act as noise on the rest of the extracted information, reducing the chances of extracting information.

A third effect to take into account is the amount of information that the system believes can be embedded in the document. The amount of information that can be embedded is related to the amount of text in the document (pages to be more exact). If the algorithms count text that is not valid to hide information on it, the amount of information that can be extracted is less than the algorithm expects, and the results when extracting the information are likely to be unexpected.

Therefore, it is highly desirable to develop a method for detecting regions that will be excluded from the embedding process of digital text watermarking algorithms for above reasons: 1) reduce unwanted visual artifacts in embedded documents, 2) increase the capacity of the system to extract the information from the previous watermarked documents and 3) achieve more accurate data about how much information can be inserted and extracted in a specific content taking into account all the diversity offered by the contents of text documents.

There are known some patents and patent applications in this field.

US2020042785A1 discloses methods, systems, and computer program products for table recognition in PDF documents. A computer-implemented method includes discretizing one or more contiguous areas of a PDF document; identifying one or more white-space separator lines within the one or more discretized contiguous areas of the PDF document; detecting one or more candidate table regions within the one or more discretized contiguous areas of the PDF document by clustering the one or more white-space separator lines into one or more grids; and outputting at least one of the candidate table regions as a finalized table in accordance with scores assigned to each of the one or more candidate table regions based on (i) border information and (ii) cell structure information.

EP2807608A1 provides a borderless table detection engine and associated method for identifying borderless tables appearing in data extracted from a fixed format document. Due to the lack of visible borders, reliable automated detection of a borderless table is difficult. The borderless table detection engine uses whitespace, rather than content, to detect borderless table candidates. Applying heuristic analysis, the borderless table detection engine discards borderless table candidates with a layout that lacks sufficient characteristics of a table and is unlikely to be a valid borderless table.

These two prior art solutions only identify tables in the input PDF files, and no other text elements, such as bullet lists, justified text, text in images, etc. Furthermore, they make use of heuristics for the table identification, and not of AI elements, which has been proven to be much more efficient in the solution of this kind of problems.

US10817717B2 relates to a method and a device for parsing a table in a document image. The method comprises the following steps: inputting a document image to be parsed which includes one or more table areas into the electronic device; detecting, by the electronic device, a table area in the document image by using a pre-trained table detection model; detecting, by the electronic device, internal text blocks included in the table area by using a pre-trained text detection model; determining, by the electronic device, a space structure of the table; and performing text recognition on a text block in each cell according to the space structure of the table, so as to obtain editable structured data by parsing. The method and the device of the present application can be applied to various tables such as line-including tables or line-excluding tables or black-and-white tables. This solution only identifies tables in the input document files, and no other text elements, such as bullet lists, justified text, text in images, etc.

US9697423B1 provides a method for image processing that includes obtaining an image including a table; identifying a first plurality of geometric lines in the image; grouping the first plurality of geometric lines into a plurality of clusters; determining a plurality of hand-drawn lines in the image corresponding to the table from the plurality of clusters; calculating a plurality of points for the plurality of hand-drawn lines; and determining a geometry of the table based on the plurality of points. As the solutions indicated before, this method only identifies tables in the input PDF files, and no other text elements, such as bullet lists, justified text, text in images, etc. Furthermore, it makes use of heuristics for the table identification, and not of AI elements.

WO2017160654A3 discloses a method for extracting data from PDF files. The method includes identifying at least one document identifier associated with a first document in a PDF file. The method further includes determining, using the at least one document identifier, a reference point identifier for identifying a reference point in the first document, an offset value for indicating a location of a first detection area in the first document, and size information for indicating a size of the first detection area in the first document. The method also includes identifying, using a reference point identifier, the reference point in the first document. The method further includes identifying, using the offset value and the size information, the first detection area in the first document and extracting, by processing binary data of the PDF file, data within the first detection area of the first document.

Other solutions or strategies are known by US9348848B2, US9268999B2, US8645819B2, US2008084573A1, US10445615B2 and US10592738B2. Other examples of prior art disclosures related to the claimed subject-matter include:

HUIJUAN YANG ET AL: "Text document authentication by integrating inter character and word spaces watermarking", 2004 IEEE International Conference on Multimedia and Expo, June 27 - 30, 2004, IEEE Operations Center, vol. 2, published on 27 June 2004, pages 955-958, XP010770979, DOI: 10.1109/ICME.2004.1394360, ISBN: 978-0-7803-8603-7 and

DUAN XINTAO ET AL: "Reversible Image Steganography Scheme Based on a U-Net Structure", IEEE Access, vol. 7, pages 9314-9323, XP011707115, DOI: 10.1109/ ACCESS.2019.2891247, published 29-01-2019

More efficient and faster methods, based on AI or computer vision techniques, able to deal with geometric distortions on a page of a document, with documents including text or not, and/or with vectorial PDFs, are therefore needed.

## Description of the Invention

To that end the present invention proposes, according to one aspect, a method for detecting document regions that will be excluded from an embedding process. The method comprises converting, by an adapter module, at least one page of a received document into a visual representation thereof, the visual representation keeping the position of the characters of the at least one page; receiving, by a text detector, the visual representation; processing, by the text detector, the visual representation using a deep neural network that predicts document invalid regions corresponding to invalid text including a table and/or a bullet list, and, by the text detector, a list of invalid regions with their associated page positions as a result of the processing; and excluding, by a watermark embedding module or by a watermark extracting module, the list of invalid regions to provide a watermarked document or a message embedded in the document.

According to the invention, the document can comprise a digital or a digitalized document.

In an embodiment, each document invalid region of the list of invalid regions has associated thereto a confidence score.

In an embodiment, the visual representation comprises an image.

In an embodiment, the image is a binary image where pixels associated to the characters are represented using a first color and where pixels associated to background are represented using a second color. In some embodiments, the first color can be white, and the second color can be black.

In an embodiment, the at least one page is in image format, wherein the converting step further comprises correcting a skew of the page by means of using a recognition algorithm. For instance, the recognition algorithm can be the Hough Transform.

In an embodiment, before performing the correcting step, the method comprises preprocessing the at least one page by means of applying a Canny Edge Detection algorithm and different morphological operations on the at least one page. Moreover, a resizing of the at least one page to a lower resolution can be made.

In an embodiment, the position of the characters can be obtained by means of using an image-based segmentation algorithm, for example a projection-based algorithm.

In an embodiment, the text detector in the processing step further uses a supervised learning algorithm. The deep neural network can be based either on a detection-based architecture or on a segmentation-based architecture.

In an embodiment, the list of invalid regions comprises a set of boxes where each box is defined by: an 'x' value indicating a left-up corner of the box in a horizontal coordinate, a 'y' value indicating a left-up corner of the box in a vertical coordinate, a 'w' value indicating a width of the box in pixels, and an 'h' value indicating a height of the box in pixels.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, the invention guarantees a more efficient result thanks to the use of AI instead of just heuristics and a faster processing time thanks to the use of digital maps in rasterized pages. Moreover, the invention is able to deal with geometric distortions on the page; documents including or not text, vectorial PDFs; identify and label both text structures and document elements, such as tables, bullet lists, justified text, image captions, images and graphs, etc.

## Brief Description of the Drawings

The previous and other advantages and features will be more fully understood from the following detailed description of embodiments, with reference to the attached figures, which must be considered in an illustrative and non-limiting manner, in which:

Fig. 1 shows the architecture for implementing a method for detecting document regions that will be excluded from an embedding process, according to an embodiment.

Fig. 2 shows another embodiment of an architecture for implementing the proposed method.

Fig. 3 shows an example of a page and its respective maps to be used by the text detector. Fig. 3A illustrates the page of the document; Fig. 3B illustrates the map created with the input adapter and the image used as input by the text detector; Fig. 3C illustrates the overlap between the page and the map.

Fig. 4 shows an embodiment of the architecture used for creating the visual representation, or map image.

Fig. 5 shows an embodiment of the skew correction module.

Fig. 6 graphically represents an example of the detection.

Fig 7 graphically shows a comparison of a watermarking algorithm without (top image) and with (bottom image) the use of the present invention.

## Detailed Description of Preferred Embodiments

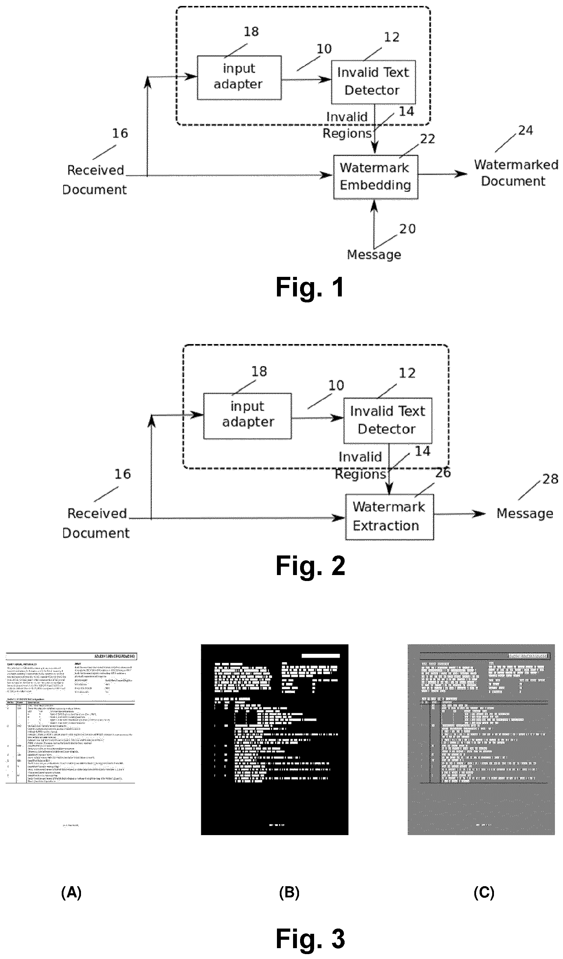

Fig. 1 shows an embodiment of the architecture where the proposed method may be used as part of a digital text watermarking process. An adapter module 18 converts one or more pages of a received document 16 (e.g., a digital document or a digitized document) into a visual representation 10 of the page content positions, which should show the visual representation of the page, or any other representation that keeps the position of the words of the page. An invalid text detector (or simply text detector) 12 takes as input the visual representation 10 and processes it using one or more artificial intelligence algorithms. The text detector 12 returns as output a list of invalid regions 14 that should be removed from an embedding process. The list of invalid regions 14 comprises associated thereto their page positions and particularly, a score indicating the level of confidence given by the method. The list of invalid regions 14 are used as input of the watermark embedding module 22, that also receives as inputs the document 16 and the message to be embedded 20. The watermark embedding module 22 can take into account the list of invalid regions 14 to create a watermarked document 24; thus achieving better results related to the visual aspect and the robustness of the embedded information.

Similarly, Fig. 2 shows the use of the invention in an extraction process. The input document 16 can be processed by the adapter module 18 to adapt the document 16 to the input required for the text detector 12, which returns the list of invalid regions 14 that can be taken into account by a watermark extraction module 26, that also receives the document 16, and returns as output a message 28 embedded in the document 16.

That is, the adapter module 18 is used to adapt the document 16 to the required input for the text detector 12. In some embodiments, the input (i.e., the visual representation 10) can be an image format, and the content of this image can be any kind of information that represents the position of the words. It can be the visual page as is or can be another type of representation.

In an embodiment, the use of abstract maps is proposed as visual representation 10. Particularly, these abstract maps are binary images with background to black pixels and words represented as white rectangles. Fig 3 shows an example of a page and its respective map that will be used by the text detector 12. In Fig 3, the overlap between the page and the used map can also be seen in order to better understand what the used input represents. The main reason to work with these kind of representations is to avoid the rasterization process when digital documents are in vectorial format (conversion from vectorial format to image) or to avoid the use of some Optical Character Recognition (OCR) method in the case of rasterized documents (the invention does not require to know about the value of the characters or words of the content, which, in facts, does not add value, as a "normal" character may stay in a selectable text area as well as in an invalid text area as a table, bullet list, etc.). Both mentioned processes (rasterization or OCR methods) are time consuming compared to the additional time of digital watermarking systems, then, by using those maps instead of rasterized pages the total time required to process vectorial and raster documents will be less. For example, the time required on a computer Intel(R) Core(TM) i7-6700K CPU @ 4.00GHz and 16Gb RAM to rasterize a page is approximately ~300ms for 300dpi resolution, and the time consumed by the well-known software Tesseract OCR for the same resolution is about ~1500ms. Text digital watermarking techniques know about the position of the characters to be able to change their positions, so the creation of a map image using this information as we propose can be done in a few milliseconds.

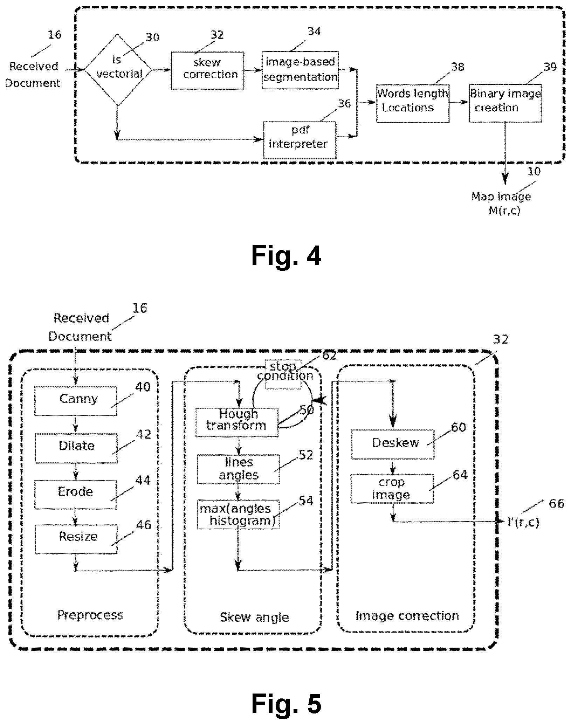

Fig. 4 shows an embodiment of how the visual representation 10 can be created. According to this embodiment, the adapter module 18 can process vectorial pdfs of any kind of image (that includes raster pdfs or any kind the format that uses images). Depending on the type of input (vectorial or image) 30 the method may vary to achieve the expected output. The output of this module is an image $M(r,c)$ 10 where $r$ is the r-th row, c is the c-th column, and $M(r,c)$ is the binarized document image.

When the page is in image format, there are multiple manners to obtain the position of the words using an image-based segmentation approach 34. The OCR methods usually return the position of the words, but in this embodiment a method based on projections is preferably proposed since it gives better time responses. Before applying the method based on projections the skew 32 of the image is corrected using a recognition algorithm, for example the Hough Transform.

Fig 5. shows an embodiment of the skew correction algorithm 32. The received document 16 in image format is first preprocessed. The page could be digitalized by a scanner or with a mobile device, where the color and geometric distortions found by the algorithm can be very varied. To tackle this problem a preprocess step is done. It consists in a first step where a Canny Edge Detection algorithm 40 is applied. Canny Edge Detection is a multi-step algorithm that can detect edges with noise suppressed at the same time. First, the image is smoothed with a Gaussian filter to reduce noise and unwanted details and textures:

$$g(r,c)= G(r,c)*I(r,c),$$

where the Gaussian filter G is defined as:

$$G=\frac{1}{\sqrt{2\pi\sigma^2}} \exp(-\frac{r^2+c^2}{2\sigma^2}).$$

The Gradient of g(r,c) is computed as:

$$M(r,c)=\sqrt{g_r^2(r,c)+g_c^2(r,c)},$$

and

$$\theta(r,c)=\tan^{-1}[g_c(r,c)+g_r(r,c)].$$

A threshold T is applied to M(r,c):

$$M_T=\begin{Bmatrix} M(r,c)\, if\, M(r,c)>T \\ 0\, otherwise \end{Bmatrix},$$

where T is chosen so that all edge elements are kept while most of the noise is suppressed.

Then, the method suppresses non-maxima pixels in the edges in the MT(r,c) obtained above to thin the edge ridges. To do so, the method checks whether each non-zero MT (r,c) is greater than its two neighbors along the gradient direction $\theta(r,c)$. If so, MT (r,c) is unchanged, otherwise, is set to 0.

The previous result can be thresholded by two different thresholds $\zeta_1$ and $\zeta$ (where $\zeta_1 < \zeta_2$) to obtain two binary images $T_1$ and $T_2$. Note that $T_2$ with greater $\zeta_2$ has less noise and fewer false edges but greater gaps between edge segments, when compared to $T_1$ with smaller $S_1$.

The method links edge segments in $T_2$ to form continuous edges. To do so, the method traces each segment in $T_2$ to its end and then searches for its neighbors in $T_1$ to find any edge segment in $T_1$ to bridge the gap until reaching another edge segment in $T_2$. The output of the Canny Edge Detection algorithm 40 is denoted here as $I^c(r,c)$.

The next steps are morphological operations in order to join and fill the gaps between chars and words and trying to convert text lines into straight lines. This is done at first with a dilate operation 42, and later with an erode operation 44. These morphological operations provides a cleaner image $I^m(r,c)$ with straight lines easier to be processed with the Hough Transform.

As the Hough Transform can be slow, the image is preferably resized 46 to work with a lower resolution image (75 dpi works well). This allows achieving the correct angle to de-skew the image at the same time that reduces the time required to get the result.

The Hough transform 50 is applied over the resized image in order to detect the angles of the text lines. The Hough Transform 50 converts the Euclidian space to the Hough Space. The Hough Space is a 2D plane that has a horizontal axis representing the slope and the vertical axis representing the intercept of a line on the edge image. A line on an edge image is represented in the form of $y = ax + b$ (Hough, 1962). One line on the edge image produces a point on the Hough Space since a line is characterized by its slope and intercept b. Usually the Hough Space uses a different form of representing the straight lines called normal lines that passes through the origin and perpendicular to that straight line. The form of the normal line is $\rho = x \cos(\theta) + y \sin(\theta)$ where $\rho$ is the length of the normal line and $\theta$ is the angle between the normal line and the x axis. In this way each edge point $(x_i, y_i)$ now generates a cosine curve in the Hough Space instead of a straight line. One line on the edge image still produces a point on the Hough Space. The lines are detected looking for these points in the Hough Space, for this task a threshold *Th* should be set. If the threshold *Th* is low then the number of lines obtained will be high, and it could be difficult to determine the more probable direction of the real lines. To avoid this problem, a recursive strategy is proposed. The threshold is set to a high value, if the lines found are less than 10, the process is repeated with a new threshold calculated as $Th\_i = \frac{3}{4} * Th\_{i-1}$, where i indicates the number of the iteration. Other values different to 10 can be used, but it has been found empirically that this number works really well. When the number of lines is higher than 10, the process is stopped. The stop condition 62 also needs to avoid infinite loops (it is possible to find less than 10 lines in a page), so the method only allows to repeat the process a finite number of times.

In a normal case, after applying the Hough Transform 50, almost ten lines are obtained. The method obtains the vector of angles θs of these lines and calculates the histogram of these angles. The maximum of the histogram 54 is taken as the estimated angle (skew angle) θf.

The de-skew 60 is made just taking -θf and rotating the image. After the rotation, the obtained image Irot(r',c') has more width and heigh than the input image. To correct this distortion the crop operation is applied over the image. An easy way to do that is to calculate the new origin point (r0, c0) as:

$$r_0 = R' - \lceil \frac{R}{2} \rceil$$

$$c_0 = C' - \lceil \frac{C}{2} \rceil ,$$

where R' and C' are the number of rows and columns of the image Irot(r',c'), and R and C are the number of rows and columns of the input image I(r,c). The crop is done over the image Irot(r',c') in the region delimited by the rows $[r_0, R]$ and the columns $[c_0, C]$.

After this crop operation the output of the skew correction module 32 is obtained; i.e. an image I'(r,c) where the rotation of the page was corrected and with the same size of the original image. This allows to the image-based segmentation achieve a high accuracy. The performance of this skew correction module 32 was compared with other methods of the state of the art, such as the Leptonica method (Dan S. Bloomberg et al. Measuring document image skew and orientation. In Document Recognition II (pp. 302 - 316). SPIE.), showing better performance in the precision of the angle obtained, the time required to make the estimation and the range of angles that the algorithm can correct.

After correcting the skew of the image, image-based segmentation 34 can be applied. As explained before, a method based on projections can be used. The method starts by binarizing the bitmap format document I'(r,c) and summing the pixels in horizontal direction, the horizontal projection Ph(r) is obtained as:

$$Ph(r) = \Sigma_c I^b(r,c),$$

where the binarized image is denoted as $I^b(r,c)$, r is the r-th row, c is the c-th column, and I(r,c) is the binarized document image.

By setting a proper threshold value, the bitmap format document can be segmented in text lines, finding optimal binarization thresholds from the image histogram. Once the projections are computed, and text lines are identified, each text line is segmented. For each line, its vertical projection Pvi(c) corresponds to:

$$P_{vi}(c) = \Sigma_r I_i^b(r,c),$$

where, $_rI_i^b$ (r,c) is the binarized document image cropped to the i-th line.

Applying the same technique used to isolate text line using the horizontal projection Ph(r), spaces in each line can be identified and measured applying a proper threshold to the vertical projection Pvi(c).

The output of the segmentation 34 is a set of word lengths and a set of their corresponding locations in the document, denoted as set W and set L respectively 38.

If the document is in vectorial format, the system can read the information from the Page Description Language (PDL) based on the standard ISO 32000 known as PDF using a PDF interpreter 36. A PDF document consists of a collection of objects that together describe the appearance of one or more pages, possibly accompanied by additional interactive elements and higher-level application data. The system reads the trailer section of the file, gets the root information, and then reads the pages object. Inside of page objects the contents objects of the page can be found. The contents may have text objects that consist of operators that can show text strings, move the text position, and set text state and certain other parameters. The system is able to read and interpret all text state operators, text-positioning operators, and text-showing operators in order to obtain the set of words lengths and a set of their corresponding locations in the document, denoted as set W and L, respectively. In this case, the operation results faster.

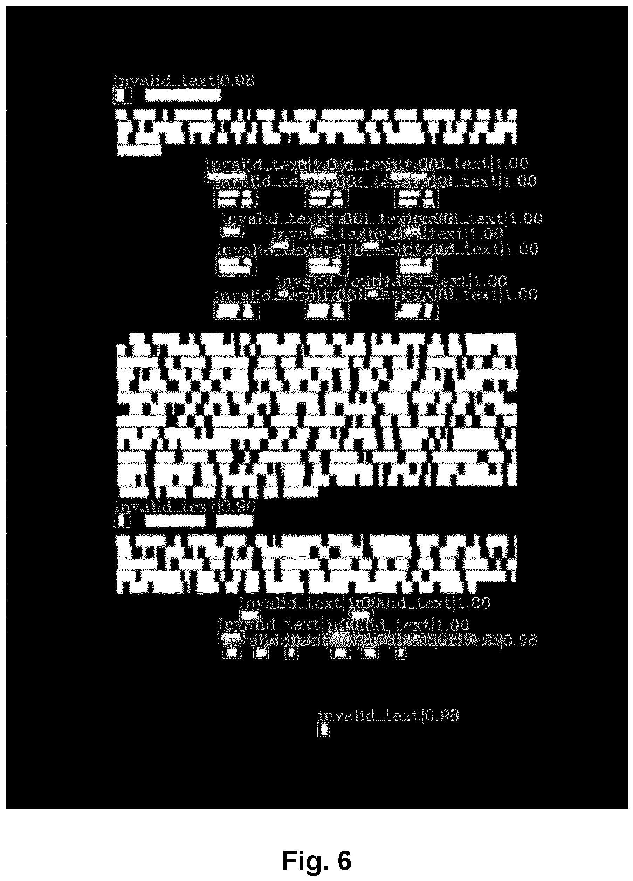

The values W and L 38 are used to create a (binary) map image M(r, c) 10 in the binary image creation module 39 where the pixels of the regions associated with the location L and word lengths W are set to white, and the rest of the pixels are set to black. L is a vector of pixel positions {(lx1 ,ly1), (lx2, ly2)... (lx n,ly_n)} indicating the left-bottom corner of the word, and W is a vector of pair of values indicating the width and high of a word {(w1 ,h1), (w2,h2)...(w_n,h_n)} where the length of the vector L and W are the same since each pair is related to a word of the page. The map M(r,c) is created with the same size as the input image I(r,c) and with all their pixels with value zero (black pixels). Then, for each value $i \subset [1,n]$ the regions delimited by $[L_i,L_i+W_i]$ are set to white (this is the same as the region $[(lx_i,ly_i),(w_{i,hi})]$ for all $i \subset [1,n]$). An example of the input map can be seen on Fig 3 and Fig. 6.

Once the input to the text detector 12 is generated, in an embodiment, a deep neural network is used to predict in the inference process the regions corresponding to the invalid text. Particularly, the use of a Feature Pyramid Network (FPN) is proposed, although other networks can be equally used such as a Single Shot MultiBox Detector (SSD), among others. The FPN network works well with different scale objects, which can be useful for the data processed here, where the size of the object depends on the size of the list, table, etc. Of course, these models have to be trained to learn the weights of the network before being applied in the inference step. This is done using supervised learning, so the data used should be annotated in previous steps.

A possible implementation of the invention can be based on the use of the Focal Loss and the use of Transfer Learning tasks, using the COCO dataset as a reference. The Focal loss prevents the vast number of easy negatives from overwhelming the text detector 12 during training. The invention can also use the Efficientnet or the Mobilenet architectures as a backbone network in order to reduce the computation terms.

The output of the network will be the set of invalid regions 14 (a set of boxes representing invalid regions) B that represents multiple detections, where each box is defined by {x,y, w, h} values and x indicates the left-up corner in the horizontal coordinate, y indicates the left-up corner of the box in the vertical coordinate, w indicates the width in pixels, and h indicates the height of the box in pixels. The output also returns a score associated to each box. This score indicates the confidence level of the detection (Fig. 6).

It should be noted that the problem can be solved as an object detection or an image segmentation problem. In this case, particularly, the detection object scenario is considered. Image segmentation is a further extension of object detection in which the method marks the presence of an object through pixel-wise masks generated for each object in the image. This technique is more granular than bounding box generation because this can help in determining the shape of each object present in the image. This granularity helps in various fields such as medical image processing, satellite imaging, etc., but it is less relevant for the tasks related here, where rectangle bounding boxes are enough to cover the goals of the system since we have corrected the geometric distortion of the pages.

One of the most important contributions of present invention is when these predictions are used as part of a digital text watermarking process based on shifts of the text elements. The solution may also be used for detecting specific objects in text documents, like tables etc., similarly, to state of the art algorithms, but with much faster processing time. The solution can be adapted for different algorithms as unwanted areas are labelled correctly in the train step of the neural network. A specific adaptation can be made using the watermarking method described in EP3477578B1, of the same authors of present invention.

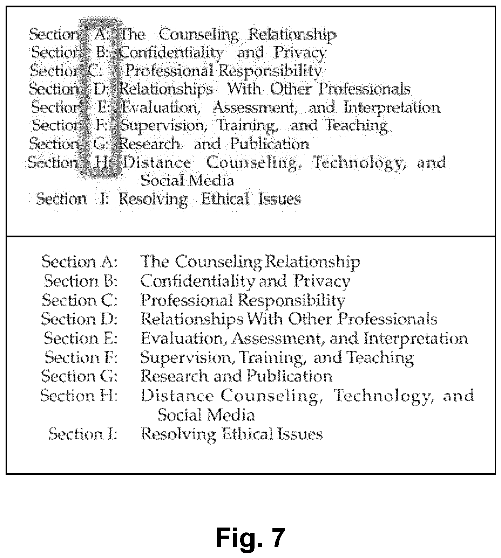

With regard to Fig. 7, it shows the output of the watermarking algorithm with and without the use of the proposed method. The line "91" shows an incorrect spacing between the "91" and the word "Section". The second image shows a perfect alignment of the contents, making the changes made on the position of the document content imperceptible.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

## Claims

1. A method for detecting document regions that will be excluded from an embedding process, comprising:

   converting, by an adapter module (18), at least one page of a received document (16) into a visual representation (10) thereof, the visual representation (10) keeping the position of the characters of the at least one page;
   receiving, by a text detector (12), the visual representation (10);
   processing, by the text detector (12), the visual representation (10) using a deep neural network that predicts document invalid regions corresponding to invalid text including a table and/or a bullet list;
   returning, by the text detector (12), a list of invalid regions (14) with their associated page positions as a result of the processing; and
   excluding, by a watermark embedding module (22) or by a watermark extracting module (26), the list of invalid regions (14) to provide a watermarked document (24) or a message (28) embedded in the document (16).

2. The method of claim 1, wherein the document (16) comprises a digital or a digitalized document, and wherein each document invalid region of the list of invalid regions (14) has associated thereto a confidence score.

3. The method of claim 1 or 2, wherein the visual representation (10) comprises an image.

4. The method of claim 3, wherein the image is a binary image where pixels associated to the characters are represented using a first color and where pixels associated to background are represented using a second color.

5. The method of claim 4, wherein the first color is white, and the second color is black.

6. The method of any one of the previous claims, wherein the at least one page is in image format, and wherein the converting step further comprises correcting a skew of the page by means of using a recognition algorithm.

7. The method of claim 6, wherein the recognition algorithm comprises a Hough Transform.

8. The method of claim 6 or 7, wherein before performing the correcting step, the method comprises preprocessing the at least one page by means of applying a Canny Edge Detection algorithm and different morphological operations on the at least one page.

9. The method of claim 8, further comprising resizing the at least one page to a lower resolution.

10. The method of any one of the previous claims 6 to 9, further comprising obtaining the position of the characters by means of using an image-based segmentation algorithm, the latter comprising a projection-based algorithm.

11. The method of any one of the previous claims, wherein the text detector (12) in the processing step further uses a supervised learning algorithm.

12. The method of claim 1, wherein the list of invalid regions (14) comprises a set of boxes where each box is defined by: an 'x' value indicating a left-up corner of the box in a horizontal coordinate, a 'y' value indicating a left-up corner of the box in a vertical coordinate, a 'w' value indicating a width of the box in pixels, and an 'h' value indicating a height of the box in pixels.

13. The method of claim 1, wherein the deep neural network is based on a detection-based architecture.

14. The method of claim 1, wherein the deep neural network is based on a segmentation-based architecture

15. A non-transitory computer-readable medium containing computer instructions stored therein for causing a computer processor to perform a method according to any of the claims 1 to 14.

**Patentansprüche**

1. Verfahren zum Detektieren von Dokumentbereichen, die aus einem Einbettungsprozess ausgeschlossen werden, das Folgendes umfasst:

   Umwandeln von mindestens einer Seite eines empfangenden Dokuments (16) durch ein Adaptermodul (18) in eine visuelle Darstellung (10) davon, wobei die visuelle Darstellung (10) die Position der Zeichen der mindestens einen Seite beibehält;
   Empfangen der visuellen Darstellung (10) durch einen Textdetektor (12);
   Verarbeiten der visuellen Darstellung (10) durch den Textdetektor (12) unter Verwendung eines tiefen neuronalen Netzwerks, das ungültige Dokumentbereiche vorhersagt, die ungültigem Text entsprechen, der eine Tabelle und/oder eine Aufzählungsliste beinhaltet;
   Zurückgeben einer Liste von ungültigen Bereichen (14) mit deren verknüpften Seitenpositionen durch den Textdetektor (12) als ein Resultat des Verarbeitens; und
   Ausschließen der Liste von ungültigen Bereichen (14) durch ein Wasserzeicheneinbettungsmodul (22) oder ein Wasserzeichenextraktionsmodul (26), um ein Dokument (24) mit einem Wasserzeichen oder eine in das Dokument (16) eingebettete Nachricht (28) bereitzustellen.

2. Verfahren nach Anspruch 1, wobei das Dokument (16) ein digitales oder ein digitalisiertes Dokument umfasst und wobei mit jedem ungültigen Dokumentbereich der Liste von ungültigen Bereichen (14) ein Vertrauensmaß verknüpft ist.

3. Verfahren nach Anspruch 1 oder 2, wobei die visuelle Darstellung (10) ein Bild umfasst.

4. Verfahren nach Anspruch 3, wobei das Bild ein binäres Bild ist, in dem Pixel, die mit den Zeichen verknüpft sind, unter Verwendung einer ersten Farbe dargestellt werden, und in dem Pixel, die mit einem Hintergrund verknüpft sind, unter Verwendung einer zweiten Farbe dargestellt werden.

5. Verfahren nach Anspruch 4, wobei die erste Farbe Weiß ist und zweite Farbe Schwarz ist.

6. Verfahren nach einem der vorhergehenden Ansprüche, wobei die mindestens eine Seite ein Bildformat aufweist und wobei der Schritt des Umwandelns ferner das Korrigieren einer Schräge mittels Verwendung eines Erkennungsalgorithmus umfasst.

7. Verfahren nach Anspruch 6, wobei der Erkennungsalgorithmus eine Hough-Transformation umfasst.

8. Verfahren nach Anspruch 6 oder 7, wobei das Verfahren vor dem Durchführen des Korrekturschritts das Vorverarbeiten der mindestens einen Seite mittels Anwendung eines Canny-Edge-Detektionsalgorithmus und verschiedener morphologischer Operationen an der mindestens einen Seite umfasst.

9. Verfahren nach Anspruch 8, das ferner das Ändern der mindestens einen Seite in eine niedrigere Auflösung umfasst.

10. Verfahren von einem der vorhergehenden Ansprüche 6 bis 9, das ferner das Erhalten der Position der Zeichen mittels Verwendung eines bildbasierten Segmentierungsalgorithmus umfasst, wobei letzterer einen projektionsbasierten Algorithmus umfasst.

11. Verfahren nach einem der vorhergehenden Ansprüche, wobei der Textdetektor (12) im Verarbeitungsschritt ferner einen überwachten Lernalgorithmus verwendet.

12. Verfahren nach Anspruch 1, wobei die Liste von ungültigen Bereichen (14) einen Satz von Boxen umfasst, in dem jede Box durch Folgendes definiert ist: einen 'x'-Wert, der eine Ecke oben links der Box in einer horizontalen Koordinate anzeigt, einen ‚y'-Wert, der eine Ecke oben links der Box in einer vertikalen Koordinate anzeigt, einen ‚w'-Wert, der eine Breite der Box in Pixeln anzeigt, und einen 'h'-Wert, der eine Höhe der Box in Pixeln anzeigt.

13. Verfahren nach Anspruch 1, wobei das tiefe neuronale Netzwerk auf einer detektionsbasierten Architektur basiert.

14. Verfahren nach Anspruch 1, wobei das tiefe neuronale Netzwerk auf einer segmentierungsbasierten Architektur basiert.

15. Nichttransitorisches computerlesbares Medium, auf dem Computeranweisungen zum Veranlassen eines Computerprozessors zum Durchführen eines Verfahrens gemäß einem der Ansprüche 1 bis 14 gespeichert sind.

## Revendications

**1.** Procédé de détection de régions de document qui seront exclues d'un processus d'intégration, comprenant :

la conversion, par un module adaptateur (18), d'au moins une page d'un document reçu (16) en une représentation visuelle (10) de celui-ci, la représentation visuelle (10) conservant la position des caractères de la au moins une page ;
la réception, par un détecteur de texte (12), de la représentation visuelle (10) ;
le traitement, par le détecteur de texte (12), de la représentation visuelle (10) à l'aide d'un réseau neuronal profond qui prédit les régions invalides du document correspondant à un texte invalide comportant un tableau et/ou une liste à puces ;
le retour, par le détecteur de texte (12), d'une liste de régions invalides (14) avec leurs positions de page associées à la suite du traitement ; et
l'exclusion, par un module d'intégration de filigrane (22) ou par un module d'extraction de filigrane (26), de la liste des régions invalides (14) pour fournir un document filigrané (24) ou un message (28) intégré dans le document (16).

**2.** Procédé selon la revendication 1, dans lequel le document (16) comprend un document numérique ou numérisé, et dans lequel un score de confiance est associé à chaque région invalide du document de la liste de régions invalides (14).

**3.** Procédé selon la revendication 1 ou 2, dans lequel la représentation visuelle (10) comprend une image.

**4.** Procédé selon la revendication 3, dans lequel l'image est une image binaire dans laquelle les pixels associés aux caractères sont représentés à l'aide d'une première couleur et dans laquelle les pixels associés à l'arrière-plan sont représentés à l'aide d'une seconde couleur.

**5.** Procédé selon la revendication 4, dans lequel la première couleur est le blanc, et la seconde couleur est le noir.

**6.** Procédé selon l'une quelconque des revendications précédentes, dans lequel la au moins une page est au format image, et dans lequel l'étape de conversion comprend en outre la correction d'une inclinaison de la page au moyen de l'utilisation d'un algorithme de reconnaissance.

**7.** Procédé selon la revendication 6, dans lequel l'algorithme de reconnaissance comprend une transformée de Hough.

**8.** Procédé selon la revendication 6 ou 7, dans lequel avant d'effectuer l'étape de correction, le procédé comprend le prétraitement de la au moins une page au moyen de l'application d'un algorithme de détection des contours de Canny et de différentes opérations morphologiques sur la au moins une page.

**9.** Procédé selon la revendication 8, comprenant en outre le redimensionnement de la au moins une page à une résolution inférieure.

**10.** Procédé selon l'une quelconque des revendications précédentes 6 à 9, comprenant en outre l'obtention de la position des caractères au moyen de l'utilisation d'un algorithme de segmentation basé sur une image, ce dernier comprenant un algorithme basé sur la projection.

**11.** Procédé selon l'une quelconque des revendications précédentes, dans lequel le détecteur de texte (12), dans l'étape de traitement, utilise en outre un algorithme d'apprentissage supervisé.

**12.** Procédé selon la revendication 1, dans lequel la liste de régions invalides (14) comprend un ensemble de cases où chaque case est définie par : une valeur « x » indiquant un coin supérieur gauche de la case en coordonnée horizontale, une valeur « y » indiquant un coin supérieur gauche de la boite en coordonnée verticale, une valeur « w » indiquant une largeur de la boite en pixels, et une valeur « h » indiquant une hauteur de la boite en pixels.

**13.** Procédé selon la revendication 1, dans lequel le réseau neuronal profond est basé sur une architecture basée sur la détection.

**14.** Procédé selon la revendication 1, dans lequel le réseau neuronal profond est basé sur une architecture basée sur la segmentation.

**15.** Support non transitoire lisible par ordinateur contenant des instructions informatiques stockées à l'intérieur pour amener un processeur informatique à exécuter un procédé selon l'une quelconque des revendications 1 à 14.

Fig. 1

Fig. 2

(A)  (B)  (C)

Fig. 3

## Fig. 4

## Fig. 5

Fig. 6

Section A: The Counseling Relationship
Section B: Confidentiality and Privacy
Section C: Professional Responsibility
Section D: Relationships With Other Professionals
Section E: Evaluation, Assessment, and Interpretation
Section F: Supervision, Training, and Teaching
Section G: Research and Publication
Section H: Distance Counseling, Technology, and
　　　　　　Social Media
Section I: Resolving Ethical Issues

Section A: The Counseling Relationship
Section B: Confidentiality and Privacy
Section C: Professional Responsibility
Section D: Relationships With Other Professionals
Section E: Evaluation, Assessment, and Interpretation
Section F: Supervision, Training, and Teaching
Section G: Research and Publication
Section H: Distance Counseling, Technology, and
　　　　　　Social Media
Section I: Resolving Ethical Issues

# Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020042785 A1
- EP 2807608 A1
- US 10817717 B2
- US 9697423 B1
- WO 2017160654 A3
- US 9348848 B2
- US 9268999 B2
- US 8645819 B2
- US 2008084573 A1
- US 10445615 B2
- US 10592738 B2
- EP 3477578 B1

**Non-patent literature cited in the description**

- Text document authentication by integrating inter character and word spaces watermarking. **HUIJUAN YANG et al.** 2004 IEEE International Conference on Multimedia and Expo. IEEE Operations Center, 27 June 2004, vol. 2, 955-958
- **DUAN XINTAO et al.** Reversible Image Steganography Scheme Based on a U-Net Structure. *IEEE Access,* 29 January 2019, vol. 7, 9314-9323
- Measuring document image skew and orientation. **DAN S. BLOOMBERG et al.** Document Recognition II. SPIE, 302-316